# EUROPEAN PATENT APPLICATION

(11) **EP 4 477 382 A1**
(43) Date of publication of application: **18.12.2024**
(21) Application number: 23179093.2
(22) Date of filing: 14.06.2023
(51) Int. Cl.: B29C 48/90, B29C 48/12, B29C 48/885, B29C 48/92

(54) **A COOLING SYSTEM FOR AN EXTRUSION LINE OF A POLYMER PROFILE**

(71) Applicant: Rolan Investment OÜ, 10117 Tallinn (EE)
(72) Inventor: Käsnar, Aivo, 51005 Tartu (EE); Saareväli, Aarne, 11912 Tallinn (EE); Valdmaa, Andrus, 61714 Ülenurme (EE)
(74) Representative: Moosedog Oy

(57) **Abstract**

A cooling system (100) for an extrusion line of a polymer profile (102) comprising a cooling table (104) and one or more longitudinal tracks (106a, 106b); a first calibrator (110); one or more second calibrators (120); and one or more third calibrators (130, 230), wherein each third calibrator of one or more third calibrators is formed of a first U-shaped profile (132, 232) and a second U-shaped profile (134, 234) facing each other with opened sides and connected by connecting means (150, 250).

## Description

### TECHNICAL FIELD

The present disclosure relates to a cooling system for an extrusion line of polymers, more specifically to a calibration and cooling units for controlling the temperature of a polymer profile.

### BACKGROUND

Polymer extrusion is a manufacturing process used to produce long continuous lengths of polymer products such as pipes, tubes, sheets and other polymer profiles. Process in the polymer extrusion line has multiple steps including cooling of the extruded polymer with a combination of calibrators and cooling water baths. The calibrators are a crucial component that shape, cool and support the polymer profile. When the polymer profiles move through a calibrator, several physical and chemical processes occur which depend on the conditions of the calibrator, including temperature, coolant flow rate and pressure. The properties of the final product will depend on how the polymer profile is processed, including how it behaves during the calibration and cooling processes. As the polymer profile is moving through the calibrators, the physical properties of the polymer profile can be changed, such as its cross-sectional shape, size and dimensions, and surface finish. Moreover, as the polymer profile is cooled, it loses heat and its temperature drops, this causes the polymer molecules to move closer together, solidifying and hardening the polymer profile. Moreover, cooling also causes deforming, and this can cause changes in the polymer profile's mechanical properties, such as its strength, modulus, and elongation at break. Calibrators can further cause a crystallization or depolymerization of the polymer, affecting the mechanical properties of the polymer profile and its transparency.

When the profile enters the calibrators that have a fixed shape, up to a first meter, there is a contact between the calibrator and the polymer profile due to internal gases. The problem with the current system is that the profile shrinks when it cools down and from the first half of the meter it starts to lose contact with the calibrator e.g. air gaps occur between the inner surfaces of the profile and the calibrator and cooling no longer takes place. To further cool the profile, a water bath must be added. This all has an influence on the cooling efficiency, which in turn has an effect on the production speed. If the speed of the polymer profile is higher in the calibrators, friction between the calibrators and polymer profile causes additional heating and further cooling is needed. Hence, the speed of production is limited due to the lack of cooling.

Considering the above, the process of calibration and cooling in the extrusion line has significant influence on both the properties of a polymer profile and the speed of production and needs to be closely monitored and controlled in order to provide reproducible products. More reproducible production process means less waste. Moreover, it can have a significant influence on the price of the production as the cooling is very energy dense activity.

Therefore, in light of the foregoing discussion, there exists a need to to overcome the aforementioned drawbacks associated with the cooling system for an extrusion line and it is necessary to increase the heat exchange in the calibrators.

### SUMMARY

The aim of the present disclosure is to provide a more efficient cooling system that overcomes the problems encountered in prior art. The aim of the disclosure is achieved by a cooling system as defined in the appended independent claim. Advantageous features are set out in the appended dependent claims.

Embodiments of the present disclosure enable more stable shape of the profile and less waste. Additional advantages of the present disclosure are that it is possible to eliminate the cooling bath, thereby saving energy, as there is no energy consumption for cooling the water. Production speed of the line can be increased, hence use less energy.

Additional aspects, advantages, features, and objects of the present disclosure would be made apparent from the drawings and the detailed description of the illustrative embodiments construed in conjunction with the appended claims that follow.

### BRIEF DESCRIPTION OF THE DRAWINGS

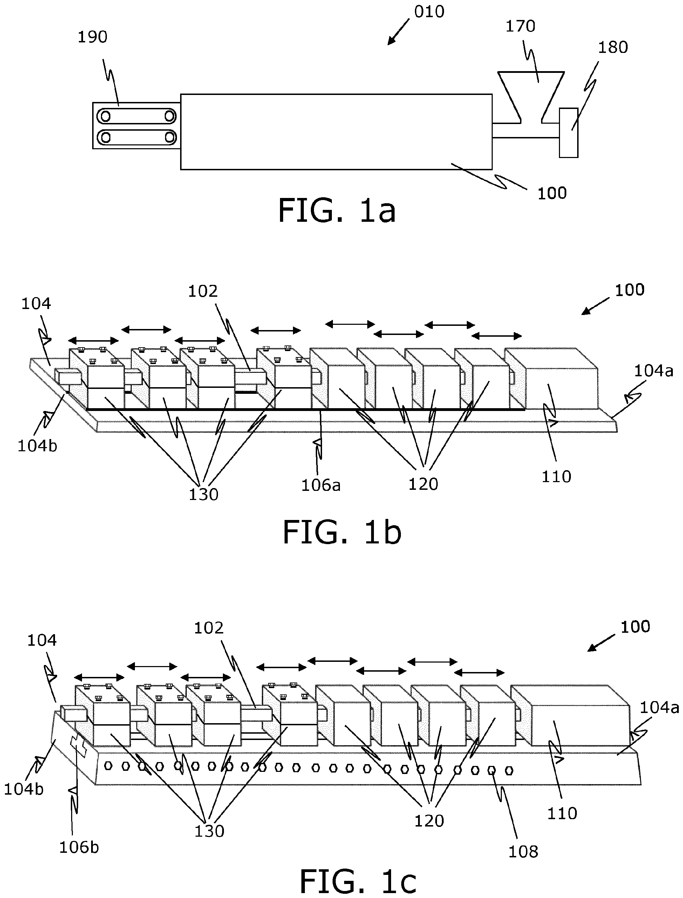

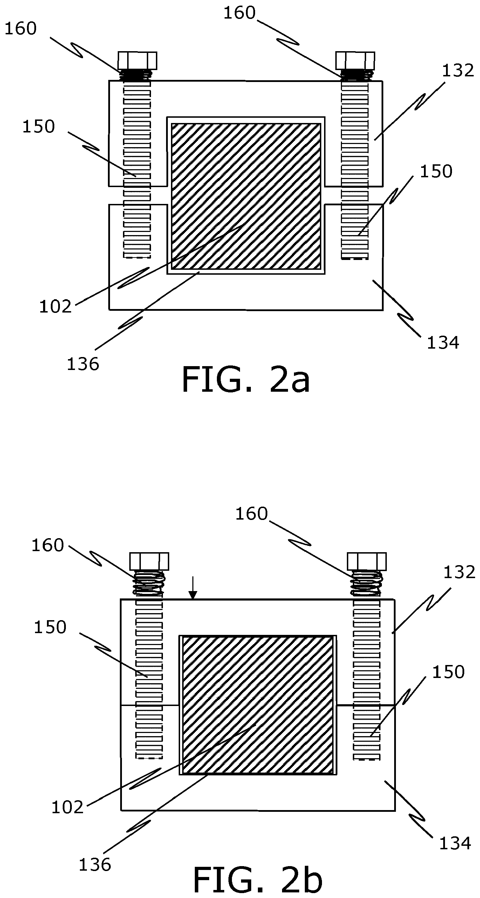

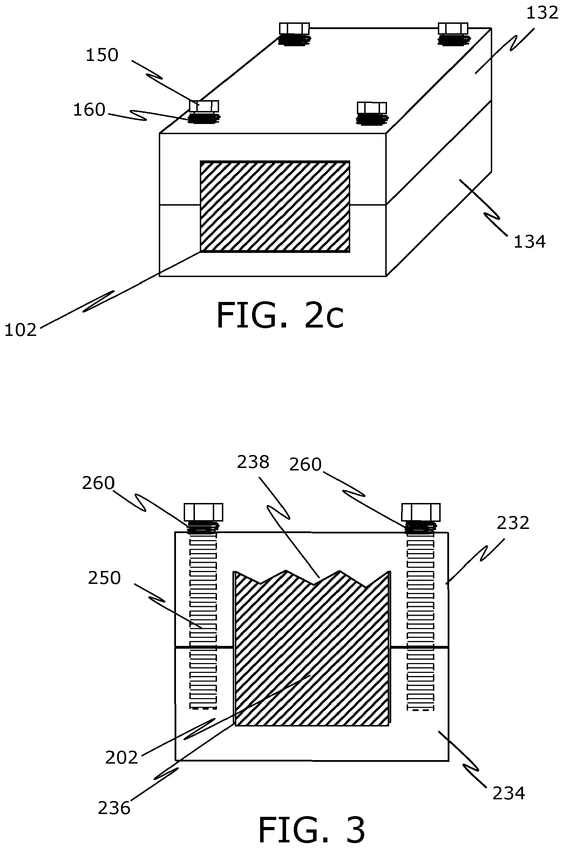

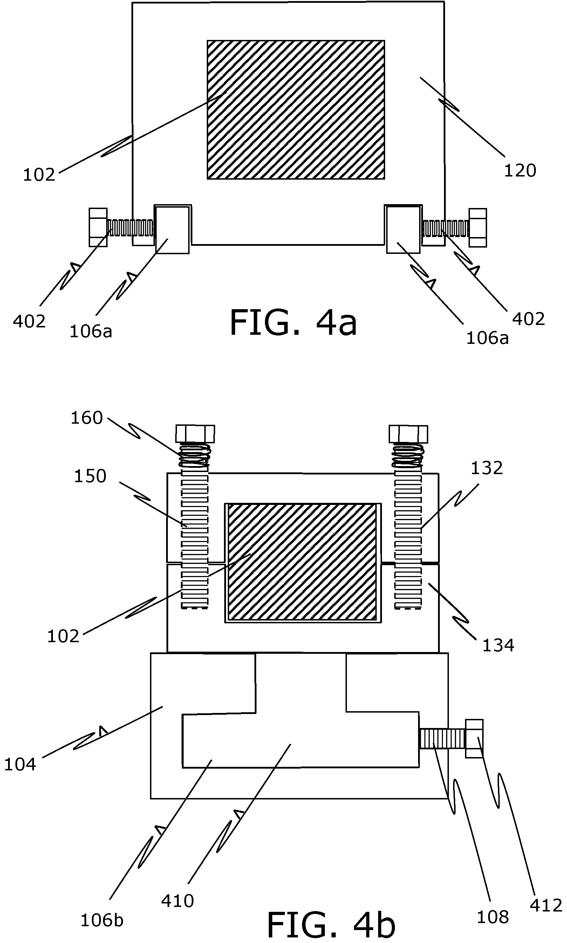

The summary above, as well as the following detailed description of illustrative embodiments, is better understood when read in conjunction with the appended drawings. For the purpose of illustrating the present disclosure, exemplary constructions of the disclosure are shown in the drawings. Embodiments of the present disclosure will now be described, by way of example only, with reference to the following diagrams wherein:
Figure FIG. 1a shows a schematic illustration of an extrusion line;
Figure FIG. 1b shows a schematic illustration of an embodiment of a cooling system for an extrusion line of a polymer profile with longitudinal tracks;
Figure FIG. 1c shows a schematic illustration of an embodiment of a cooling system for an extrusion line of a polymer profile with T-shaped longitudinal tracks;
Figure FIG. 2a shows a schematic illustration of an embodiment of cross section of the third calibrator where the first and the second U-shaped profiles are not in contact;
Figure FIG. 2b shows a schematic illustration of an embodiment of cross section of the third calibrator where the first and the second U-shaped profiles are in contact and closed around the polymer profile;
Figure FIG. 2c shows the third calibrator shown in FIG. 1b in perspective view;
Figure FIG. 3 shows a schematic illustration of an embodiment of cross section of the third calibrator where the first U-shaped profile has a zigzag shape;
Figure FIG. 4a shows a schematic illustration of cross section of a second calibrator with means for moving along longitudinal tracks;
Figure FIG. 4b shows a schematic illustration of cross section of a second calibrator with T-shaped leg as means for moving along longitudinal tracks.

### DETAILED DESCRIPTION OF EMBODIMENTS

The following detailed description illustrates embodiments of the present disclosure and ways in which they can be implemented.

In a first aspect, an embodiment of the present disclosure provides a cooling system for an extrusion line of polymer profile, the cooling system comprises a cooling table having a first end and a second end and one or more longitudinal tracks between the first end and the second end, a first calibrator comprising a first inlet of the polymer profile, a first flow channel of the polymer profile, and a first outlet of the of the polymer profile, wherein the first calibrator is attached to the first end of the cooling table; one or more second calibrators comprising a second inlet of the polymer profile, a second flow channel of the polymer profile and a second outlet of the polymer profile, wherein the one or more second calibrators are movably placed to the one or more longitudinal tracks after the first calibrator, and one or more third calibrators comprising a third inlet of the polymer profile, a third flow channel of the polymer profile and a third outlet of the polymer profile, wherein one or more third calibrators are movably placed to the one or more longitudinal tracks after the one or more second calibrators, wherein each third calibrator of one or more third calibrators is formed of a first U-shaped profile and a second U-shaped profile facing each other with opened sides and connected by connecting means, and wherein the third flow channel of the polymer profile is formed by the facing opened sides of the first U-shaped profile and the second U-shaped profile.

The term "*cooling system"* as used herein refers to an essential component of the extrusion line that helps to cool and solidify the polymer entering the cooling step. It ensures that the polymer profile maintains its shape, dimensional accuracy, and desired properties as it exits the extruder and progresses through the extrusion line. The cooling system design is influenced by factors such as the type of polymer profile, extrusion speed, product specifications, and desired production output. The cooling system is placed in the extrusion line between the pulling unit and the extruder. The extruder is used to melt the polymer profile and feed it into the cooling system and is powered by an extruder motor. Pulling unit is used to control the speed of the polymer profile moving through the cooling system. Pulling unit provides a consistent and uniform feeding of the polymer profile and controls the elongation or stretching of the polymer profile. Pulling unit plays a crucial role in maintaining proper dimensional accuracy and quality of the manufactured product.

The term *"cooling table"* as used herein refers to a component in the extrusion line that is located under the calibrators and is adapted to provide support for the calibrators. The cooling table consists of a long, flat surface that support the calibrators while the polymer profile continues cooling and solidifying moving through the calibrators. The purpose of the cooling table is to allow to accommodate the calibrators on top of if for extended cooling time, ensuring that the polymer profile reaches its desired rigidity and dimensional stability before further handling or processing. The length of the cooling table thus can vary depending on the number of calibrators need for the specific extrusion process and product requirements. The cooling table may made of materials that withstand the heat and weight of the calibrators, such as stainless steel or aluminium.

The term *"calibrator"* as used herein refers to a specialized component of the cooling system that enables to cool the polymer profile and helps to control the final shape and dimensions of the polymer profile. Calibrators have an inlet of the polymer profile and an outlet of the polymer profile and a flow channel for the polymer profile between the inlet of the polymer profile and the outlet of the polymer profile. The term "first calibrator" as used herein refers to a calibrator that is attached to the first end of the cooling table immediately after the extruder and is stationarily connected to the cooling table. Its purpose is to shape and cool the polymer profile as the molten polymer mass exits the extruder and enters into the inlet of the polymer profile and passing through the first calibrator. The first calibrator is attached to the first end of the cooling table so that is not movable during the extrusion process to avoid it moving away from the extruder due to the pressure exerted by the molten polymer coming out of the extruder. The molten polymer is very unstable when it enters the first calibrator and is calmed down by the first calibrator attached to the cooling table.

The term "second calibrator" as used herein refers to the one or more calibrators that are located on the cooling table after the first calibrator and are movable on the cooling table along the longitudinal tracks. The term "third calibrator" as used herein refers to the one or more calibrators that are located on the cooling tale after the second calibrators and are movable on the cooling table along the longitudinal tracks.

The one or more second calibrators and the one or more third calibrators are movable on the longitudinal tracks back and forward so that the location of the calibrators on the cooling table can be changed and thus the distances between the calibrators can be adjusted. This enables to adjust the cooling process of the polymer profile according to the cooling speed. The location of the calibrators on the cooling table can be fixed by mounting means, e.g., mounting screws, clamps, brackets or by nuts and bolts. In an embodiment, the calibrators movably placed to the one or more longitudinal tracks may comprise holes for using mounting screws for attaching the second and the third calibrators to the longitudinal tracks.

Movability of the calibrators is needed depending on the properties of the polymer material used for polymer profiles. When the polymer profile is moving through the calibrators, the temperature from the inside of the profile is moving towards the surface of the polymer profile and when it dissipates, the polymer profile cools. For the effective cooling, the surface of the polymer profile inside the calibrator has to be in contact of the inner surface of the calibrator. When the heat from inside the polymer profile moves towards the surface of the polymer profile it heats up the calibrator. When the the temperature of the calibrator raises then the efficiency of cooling the polymer profile decreases. Therefore, it is necessary to keep a gap between the two calibrators to improve the efficiency of cooling process. For this dissipation of the heat of the polymer profile, the polymer profile needs to be outside of the calibrator. If the polymer profile is always inside the calibrator, the heat cannot dissipate, and the polymer profile will expand. The movability of the calibrators is allowing to arrange them in such distances that the cooling is most efficient for the polymer profile. If there is too much expansion in the calibrator, the calibrators need to be moved closer. If the shrinking is too much, calibrators need to be moved apart.

The one or more third calibrators are formed of two U-shaped profiles facing each other with open sides and connected by connecting means. The term "*U-shaped profile"* as used herein refers to a U-shaped component that combined with a second U-shaped component makes the third calibrator used in polymer profile production and are typically made of durable and heat-resistant material. The U-shaped profile is made of aluminium, stainless steel, tool steel, chrome-plated steel, or ceramics. The one or more third calibrators formed of the two U-shaped profiles which are connected to each other by connecting means ensure that during the cooling of the polymer profile the inner surface of the one or more calibrators is all the time in contact with the outer surface of the polymer profile thereby providing more efficient cooling. I.e., when the polymer profile when moving through the flow channel of the one or more third calibrators is shrinking then the connecting means adapted to push the U-shaped profiles together ensure that the contact between the polymer profile and the calibrator is all the time guaranteed, which enables efficient cooling of the polymer profile. The one or more third calibrators are movable along the longitudinal tracks. It allows for additional control of cooling the polymer profile and precise control over the final dimensions and shape of the product, ensuring consistent quality and performance.

The term *"flow channel"* as used herein refers to the inner chamber of the calibrators through which the polymer profile is moving and is thus adapted to give the required shape to the polymer profile. The flow channel shape of the calibrators can be customized based on the desired shape, dimensions, and characteristics of the polymer profile.

The term "*longitudinal track"* as used herein refers to one or more guides or tracks that are mounted or formed on the cooling table of the polymer extrusion line. There can be one or more longitudinal tracks, depending on the design or weight of the calibrators. Optionally, the one or more longitudinal tracks may be one or more rails placed on the cooling table or the one or more longitudinal tracks may be T-shaped longitudinal space (e.g., a longitudinal groove or a longitudinal cavity) formed inside the surface of the cooling table and adapted to receive the T-shaped support leg of the calibrator. These longitudinal tracks serve as guides to control the movement and alignment of the second, the third and the fourth calibrators as the polymer profiles pass through the calibrators during the cooling process. Optionally, the longitudinal tracks on the cooling table are typically made of materials such as stainless steel or aluminium. When there are more than one longitudinal tracks, the longitudinal tracks are positioned parallel to each other, so that the second, the third and the fourth calibrators can be aligned in such a way that polymer profiles are going through them along a predetermined path, preventing twisting, bending, or irregular positioning. This helps to maintain the dimensional accuracy and shape of the polymer profiles. The longitudinal tracks can be adjustable to accommodate different calibrator sizes and shapes.

In an embodiment, the first U-shaped profile and the second U-shaped profile are connected movably relative to each other. This allows to change the distance between the first and the second U-shaped profile. The calibrators of the cooling system ensure that the first and the second U-shaped profile are tightened around the polymer profile even when the polymer profile is shrinking when moving through the cooling system. This ensures that there are fewer air gaps between the inner surfaces of the first and the second U-shaped profiles. Since these air gaps would cause less efficient cooling and changes in the polymer properties, the use of U-shaped profiles with connecting means (e.g., spring fittings) ensures that there is no open space between the inner surface of the U-shaped profiles and outer surface of the polymer profile and thus the inner surface of the calibrator is during the cooling process all the time in contact with polymer profile, which ensures more efficient cooling of the polymer profile.
more stable polymer profile shape and less waste. Eliminating the cooling bath means saving energy, since there is no energy consumption for cooling the water in the cooling bath. Since the cooling is more efficient, faster production can be used since the material is cooled down faster when moving through the calibrators. Additionally, since the first and the second U-shape profiles can be disconnected from each other, this gives the possibility to open the calibrators as needed and this allows quick access to their inner chamber. This also gives a possibility to use different shape profiles by simply changing the first U-shaped profile. Opening the calibrator also helps with the troubleshooting of the cooling system.

In an embodiment, an inner dimensions of the third calibrators are smaller than inner dimensions of the second calibrators. The term *"inner dimension"* as used herein refers to the dimension of the flow channel of the polymer profile. As the polymer profile is shrinking while moving through the cooling system, the smaller inner diameter of the third calibrators in comparison to second calibrators will allow quicker and more efficient contact with the polymer profile as the third calibrators are already configured to be smaller and therefore less tightening is needed than if these would remain the same size as the second calibrators.

In an embodiment, the connecting means is selected from a group comprising spring fittings, spring bolts, spring-loaded T-Bolts, spring-loaded Eye-Bolts. The term *"connecting means"* as used herein refers to the various methods or mechanisms used to join or connect the first and the second U-shaped profile. The term "spring" as used herein refers to an elastic machine element, that possess an ability to deflect under an action of the load and returns to an original shape when the load is removed. Spring fittings enable automated adjusting of the gap between the first and the second U-shaped profile and inner diameter will be controlled by the polymer profile entering the calibrator. The gap tightness can be controlled by the spring shape, material or other physical parameters such as thickness, softness. Optionally, the springs are fabricated using a spring steel. The term "spring bolt" as used herein refers to type of mechanical fastening device that uses the force of a spring to secure or release a bolt. It consists of a bolt or rod with a helical spring surrounding it. The spring applies tension or compression force to keep the bolt in a locked or unlocked position. When the bolt is extended, it engages with a corresponding opening or strike plate, providing a secure closure. When the bolt is retracted, it disengages from the opening or strike plate, allowing for the opening or release. The advantage of using a spring bolt is that it provides a self-locking mechanism. The spring force maintains the engagement of the bolt, ensuring that it remains in a locked or unlocked position until intentionally operated by the user. This makes spring bolts suitable for applications where a positive lock is required without the need for additional external forces or mechanisms.

In an embodiment, the cooling system further comprises one or more fourth calibrators comprising a fourth inlet of the polymer profile, a fourth flow channel of the polymer profile, and a fourth outlet of the of the polymer profile, wherein the one or more fourth calibrators are movably placed to the one or more longitudinal tracks after the one or more third calibrators. The term *"fourth calibrator"* as used herein refers to optional calibrators with connecting means that will provide additional cooling if necessary. This could be needed for specific mixtures of polymers which are extruded at higher temperatures, or which have higher heat capacity.

In an embodiment, one or more second calibrators, one or more third calibrators, one or more fourth calibrators comprise means of moving along longitudinal tracks. Optionally, the calibrators comprise one or more supporting means that match with the shape of the longitudinal tracks and are insertable to the longitudinal tracks in an embodiment, wherein the longitudinal track is a longitudinal space formed into the surface of the cooling table and are used to move the calibrators along the longitudinal tracks. Optionally, calibrators have a T-shaped leg which moves along a T-shaped longitudinal tracks inside the cooling table.

These T-shaped longitudinal tracks keep the calibrators stable and provide a smooth surface for the calibrators to move on. The location of the calibrators on the cooling table can be fixed by using mounting means, e.g., mounting screws.

In an embodiment, a length of the first calibrator is 700 - 1300 mm, thus the length of the first calibrator may be from 700, 720, 740, 760, 780, 800, 820, 840, 860, 880, 900, 920, 940, 960, 980, 1000, 1020, 1040, 1060, 1080, 1100, 1120, 1140, 1160, 1180, 1200, 1220, 1240, 1260 or 1280 mm up to 720, 740, 760, 780, 800, 820, 840, 860, 880, 900, 920, 940, 960, 980, 1000, 1020, 1040, 1060, 1080, 1100, 1120, 1140, 1160, 1180, 1200, 1220, 1240, 1260, 1280 or 1300 mm. The first calibrator needs to be the longest for various reasons. The first calibrator is responsible for initial cooling and solidification of the molten polymer. The longer length allows for a greater contact time between the molten polymer and the cooling system. This helps to rapidly reduce the temperature of the polymer and promote solidification, ensuring that the shape and dimensions of the polymer profile are maintained. The longer length of the first calibrator aids in establishing and maintaining the dimensional stability of the polymer profile. As the polymer profile passes through the first calibrator, it undergoes further cooling and setting, which helps to prevent any significant changes or deformations in its shape. The first calibrator also plays a role in shaping and defining the outer surface of the polymer profile. The longer length allows for better control over the shaping process, ensuring that the polymer profile maintains its desired cross-sectional profile and surface finish. This is crucial for achieving consistent and high-quality products.

In an embodiment, a length of the one or more second calibrators is 300 - 500 mm, thus the length of one or more second calibrators may be from 300, 310, 320, 330, 340, 350, 360, 370, 380, 390, 400, 410, 420, 430, 440, 450, 460, 470, 480 or 490 mm up to 310, 320, 330, 340, 350, 360, 370, 380, 390, 400, 410, 420, 430, 440, 450, 460, 470, 480, 490 or 500 mm. The one or more second calibrators are shorter in length than the first calibrator since by the time the polymer profile reaches the second calibrators, it has already undergone initial shaping and cooling in the first calibrator. The shorter length of the second calibrator allows for more precise control over cooling and the final dimensions and shape of the product. As the polymer profile exits the first calibrator, it starts to solidify and become more rigid. The shorter length of the second calibrators takes advantage of this increased rigidity to provide additional support and maintain the desired shape. The polymer profile material may still be relatively malleable or susceptible to deformation at this stage, so the shorter length helps prevent any unwanted changes in shape or dimensions. Since the polymer profile has already undergone significant cooling and solidification in the first calibrator, the cooling requirements in the second calibrators are generally lower. The shorter length allows for a shorter cooling zone. This can help optimize the overall process efficiency and reduce energy consumption. Moreover, the shorter length allows for easier changeovers between different product sizes or shapes, as adjustments can be made more quickly and conveniently.

In an embodiment, a length of the one or more third calibrators is 250-300 mm, thus the length of the one or more third calibrators may be from 250, 260, 270, 280, or 290 mm up to 260, 270, 280, 290 or 300 mm. The third calibrators are the shortest and allow additional control of the cooling and precise dimensional control of the polymer profile as these further refine the dimensions and ensure consistency. The third calibrator can help fine-tune the shape and size of the polymer profile, providing an additional level of accuracy. The third calibrator can contribute to achieving a smoother and more polished surface on the polymer profile. By applying appropriate pressure and contact with the polymer profile, it helps to refine the surface texture and reduce any imperfections.

In an embodiment, the cooling system is adapted for the extrusion line of the polymer profile comprising mixture of polymers. The term *"mixture of polymers"* as used herein refers to a polymer profile production line where more than one type of polymers are mixed. When different type of raw plastic materials are melted and thus more than one type of polymer is mixed during the extrusion process for forming the mixed polymers into a continuous profile then the behaviour of the mixed polymers in the calibrators during cooling depends on its thermal properties, such as heat capacity and thermal conductivity, which determine how quickly the material can cool and solidify. If the polymers in the mixture have very different thermal properties, this can lead to uneven cooling and potentially distortions in the final product. If the different type of polymers in the mixture of polymers are incompatible, then the behaviour during cooling will depend on the distribution of the phases and how they interact with each other. Therefore, when extruding a mixture of polymers, careful control of the extrusion and cooling process is necessary to ensure a high-quality final product. The adjustable distance between the calibrators and the of the cooling system according to the embodiments of the present disclosure enable efficient cooling. Due to the different behaviour of different type of polymers during the extrusion and cooling process the mixture of different polymers during the extrusion process may be unpredictable. I.e., the polymer profile may shrink and expand uncontrollably. In such cases the one or more third calibrators ensure that the contact between the inner surface of the calibrators and the outer surface of the polymer profile is all the time guaranteed, which enables efficient cooling.

Additionally, in the case of mixed polymers, multiple polymer components need to be handled and fed into the extrusion line. This requires additional equipment such as feeders, hoppers, and mixing systems to ensure accurate and consistent blending of the different polymers. Moreover, specialized mixers or blending units may be incorporated into the extrusion line to ensure effective dispersion of the polymers. The calibrators used in the extrusion process may need to be modified or customized to accommodate the specific requirements of the mixed polymers.

In an embodiment, a number of calibrators for the extrusion line is arrangeable according to at least one of a required production rate, a composition of the mixture of polymers and a heat dissipation capacity of the mixture of polymers. This provides several technical advantages.

If the extrusion line's production rate is high, more calibrators can be used to ensure that each section of the extrudate is adequately cooled and sized before it exits the line. This helps to maintain the speed of production while ensuring that the final product meets the desired specifications. As the composition of the polymer mixture may affect the cooling rate and behaviour of the polymer profile and if the polymer mixture has a high heat capacity or low thermal conductivity, it requires a larger number of calibrators to cool it properly. On the other hand, if the polymer blend cools rapidly, fewer calibrators may be needed. Thus, if the number of calibrators for the extrusion line is arrangeable, this enables mode efficiently to adjust the cooling according to the corresponding extrusion process. More efficient cooling is essential for ensuring dimensional stability in the extrudate. By adjusting the number of calibrators based on the thermal properties of the polymer mixture, it is possible to minimize shrinkage and warping and produce a final product with the correct dimensions. By using the appropriate number of calibrators, the cooling process can be better controlled to minimize defects like warping, shrinkage, or internal stresses in the final product that rapid or uneven cooling may lead to.

### DETAILED DESCRIPTION OF THE DRAWINGS

Referring to figure FIG. 1a, there is shown a schematic illustration of an extrusion line **010** where the cooling system **100** is situated between the pulling unit **190** and an extruder **170** moved by an extruder motor **180.**

Referring to figure FIG. 1b, there is shown a schematic illustration of an embodiment of a cooling system **100** for an extrusion line of a polymer profile **102.** As illustrated, a cooling system **100** comprises a cooling table **104;** one or more longitudinal tracks **106a** between the first end of the cooling table **104a** and the second end of the cooling table **104b;** a first calibrator **110** attached to the first end of the cooling table; one or more second calibrators **120** movably placed to the one or more longitudinal tracks after the first calibrator; and one or more third calibrators **130** movably placed to the one or more longitudinal tracks after the one or more second calibrators.

Figure FIG. 1c is a schematic illustration of an embodiment of a cooling system **100** for an extrusion line of a polymer profile **102.** As illustrated, a cooling system **100** comprises a cooling table **104;** one or more longitudinal tracks **106b** as a T-shaped space between the first end of the cooling table **104a** and the second end of the cooling table **104b;** a first calibrator **110** attached to the first end of the cooling table; one or more second calibrators **120** movably placed to the one or more longitudinal tracks after the first calibrator; and one or more third calibrators **130** movably placed to the one or more longitudinal tracks after the one or more second calibrators; holes **108** for using mounting screws for attaching the second and the third calibrators to the longitudinal tracks.

Figure FIG. 2a is a schematic illustration of cross section of third calibrator which is formed by a first U-shaped profile **132** and a second U-shaped profile **134** facing each other with opened sides and connected by connecting means **150** and spring fitting **160,** wherein the flow channel of the polymer profile **102** is formed. The first U-shaped profile and the second U-shaped profile are not in contact and there is an open space **136** between the first and the second U-shaped profile and the polymer profile.

Figure FIG. 2b is a schematic illustration of cross section as above for FIG. 2a but the first U-shaped profile **132** and a second U-shaped profile **134** facing each other with opened sides are in contact and closed around the polymer profile **102** by using the connecting means **150** and spring fitting **160** and there is no open space **136** between the first and the second U-shaped profile and the polymer profile.

Figure FIG. 2c shows the third calibrator shown in FIG. 2b in a perspective view. The first U-shaped profile **132** and a second U-shaped profile **134** are facing each other with opened sides in contact and closed around the polymer profile **102** by using the connecting means **150** and spring fitting **160.**

Figure FIG. 3 is a schematic illustration of cross section of third calibrator which is formed by a first U-shaped profile **232** with a zigzag shape and a second U-shaped profile **234** facing each other with opened sides and connected by connecting means **250** and spring fitting **260** wherein the flow channel of the polymer profile **202** is formed and the upper part of the polymer profile is matching a zig-zag shape **238** of a first U-shaped profile.

Figure FIG. 4a is a schematic illustration of cross section of the second calibrator **120,** wherein the flow channel of the polymer profile **102** is formed, along the longitudinal tracks **106a** attached to the using mounting screws **402.**

Figure FIG. 4b is a schematic illustration of cross section of the third calibrator **130** which is formed by a first U-shaped profile **132** and a second U-shaped profile **134** facing each other with opened sides and connected by connecting means **150** and spring fitting **160,** wherein the flow channel of the polymer profile **102** is formed. It is equipped with a T-shaped leg **410** as means for moving along longitudinal tracks that are T-shaped space **106b** mounted inside the cooling table **104.** Mounting screws **412** through the holes **108** are used for attaching the second calibrator **120** T-shaped leg **410** to the cooling table 104.

## Claims

1. A cooling system (100) for an extrusion line of a polymer profile (102), the cooling system comprises
a cooling table (104) having a first end (104a) and a second end (104b) and one or more longitudinal tracks (106a, 106b) between the first end and the second end,
a first calibrator (110) comprising a first inlet of the polymer profile, a first flow channel of the polymer profile, and a first outlet of the of the polymer profile, wherein the first calibrator (110) is attached to the first end (104a) of the cooling table (104);
one or more second calibrators (120) comprising a second inlet of the polymer profile, a second flow channel of the polymer profile and a second outlet of the polymer profile, wherein the one or more second calibrators (120) are movably placed to the one or more longitudinal tracks (106) after the first calibrator (110), and
one or more third calibrators (130, 230) comprising a third inlet of the polymer profile, a third flow channel of the polymer profile and a third outlet of the polymer profile, wherein one or more third calibrators (130, 230) are movably placed to the one or more longitudinal tracks (106 a, 106b) after the one or more second calibrators (120), wherein
each third calibrator of one or more third calibrators is formed of a first U-shaped profile (132, 232) and a second U-shaped profile (134, 234) facing each other with opened sides and connected by connecting means (150, 250), and wherein the third flow channel of the polymer profile is formed by the facing opened sides of the first U-shaped profile (132, 232) and the second U-shaped profile (134, 234).

2. The cooling system (100) according to claim 1, wherein the first U-shaped profile and the second U-shaped profile are connected movably relative to each other.

3. The cooling system (100) according to claim 1 or 2, wherein an inner dimensions of the third calibrators (130) are smaller than inner dimensions of the second calibrators (120).

4. The cooling system (100) according to any of the preceding claims, wherein the connecting means (150, 250) is selected from a group comprising spring fittings, spring bolts, spring-loaded T-Bolts, spring-loaded Eye-Bolts.

5. The cooling system (100) according to any of the preceding claims, wherein the cooling system further comprises one or more fourth calibrators (140) comprising a fourth inlet of the polymer profile, a fourth flow channel of the polymer profile, and a fourth outlet of the of the polymer profile, wherein the one or more fourth calibrators (110) are movably placed to the one or more longitudinal tracks (106 a, 106b) after the one or more third calibrators (130).

6. The cooling system (100) according to any of the preceding claims, wherein the one or more second calibrators (120), one or more third calibrators (130, 230), one or more fourth calibrators (140) comprises means of moving along longitudinal tracks.

7. The cooling system (100) according to any of the preceding claims, wherein a length of the first calibrator (110) is 700 - 1300 mm.

8. The cooling system (100) according to any of the preceding claims, wherein a length of the one or more second calibrators (120) is 300 - 500 mm.

9. The cooling system (100) according to any of the preceding claims, wherein a length of the one or more third calibrators (130, 230) is 250-300 mm.

10. The cooling system (100) according to any of the preceding claims, wherein the cooling system (100) is adapted for the extrusion line of the polymer profile comprising mixture of polymers.

11. The cooling system (100) according to any of the preceding claims, wherein a number of calibrators for the extrusion line is arrangeable according to at least one of a required production rate, a composition of the mixture of polymers and a heat dissipation capacity of the mixture of polymers.
